# FASCICULE DE BREVET EUROPEEN

(11) **EP 3 303 037 B1**
(45) Date de publication et mention de la délivrance du brevet: **02.09.2020**
(21) Numéro de dépôt: 16723118.2
(22) Date de dépôt: 17.05.2016
(51) Int. Cl.: B60K 11/08

(54) **PANNEAU DE VOLETS ET VÉHICULE AUTOMOBILE**
KLAPPENPLATTE UND KRAFTFAHRZEUG
FLAP PANEL AND MOTOR VEHICLE

(30) Priorité: 29.05.2015 FR 1554893
(43) Date de publication de la demande: 11.04.2018
(73) Titulaire: Valeo Systemes Thermiques, 78320 Le Mesnil Saint Denis (FR)
(72) Inventeur: VACCA, Frédéric, 78910 Behoust (FR)
(74) Mandataire: Tran, Chi-Hai
(86) Numéro de dépôt international: PCT/EP2016/061045
(87) Numéro de publication internationale: WO 2016/192984

(56) Documents cités:
- DE-A1-102008 006 020
- DE-A1-102011 006 114
- DE-A1-102013 107 974
- DE-U1-202005 010 683
- US-A1- 2006 211 364

## Description

L'invention concerne un panneau de volets pour entrée d'air de véhicule automobile et un véhicule automobile équipé d'au moins un panneau de volets. Le document US2006/211364 montre un panneau selon le préambule de la revendication 1.

Les faces avant de véhicules automobiles sont généralement composées d'une entrée d'air principale ou de deux entrées d'air, dites voie haute et voie basse, séparées par une poutre parechoc. Derrière cette poutre parechoc sont généralement placés les échangeurs de chaleur du véhicule automobile, comme par exemple celui utilisé pour la climatisation de l'habitacle.

Un panneau de volets est également généralement monté à l'arrière des entrées d'air du véhicule.

Les volets sont formés de lamelles montées pivotantes transversalement sur le panneau. L'inclinaison des volets peut être pilotée entre une position verticale de fermeture bloquant le passage de l'air et plusieurs positions intermédiaires jusqu'à une position horizontale d'ouverture où un flux d'air maximum peut circuler.

Lorsque le panneau de volets est fermé, le véhicule présente un meilleur coefficient de pénétration de l'air, ce qui permet de diminuer la consommation de carburant et l'émission de CO₂. En outre, les volets pilotés sont agencés devant un dispositif d'échange thermique, ce qui permet en position de fermeture, d'accélérer la montée en température des échangeurs en phase de chauffage en diminuant également la consommation du véhicule et donc l'émission de CO₂.

Cependant, la place disponible sous capot entre la poutre parechoc et les échangeurs thermiques est relativement réduite, ce qui peut compliquer l'intégration du panneau de volets pilotés avec d'autres composants, tels que le radar d'aide au stationnement.

On cherche en outre à améliorer l'efficacité du panneau de volets en position d'ouverture.

Un des buts de la présente invention est de proposer un panneau de volets permettant de mieux optimiser l'espace disponible sous le capot du véhicule. Un autre but de la présente invention est d'améliorer l'efficacité du panneau de volets en position d'ouverture.

À cet effet, l'invention a pour objet un panneau de volets pour entrée d'air de véhicule automobile comprenant une pluralité de volets montés mobiles en pivotement autour d'un axe longitudinal de pivotement respectif, les axes longitudinaux de pivotement s'étendant parallèlement les uns aux autres et étant disposés les uns à côté des autres l'alignement des axes longitudinaux de pivotement s'inscrit dans une surface courbe. Le panneau selon l'invention comporte au moins un axe souple d'entraînement relié aux volets s'étendant perpendiculairement aux axes longitudinaux de pivotement des volets.

On peut ainsi obtenir un panneau de volets dont la forme peut suivre celle des éléments situés devant lui, tels que la poutre parechoc, la calandre ou d'autres éléments de renforts du véhicule.

Le panneau de volets peut être rapproché au plus près des entrées d'air du véhicule, ce qui permet d'augmenter l'espace disponible sous capot.

La distance augmentée entre le panneau de volets et le dispositif d'échangeurs thermiques permet d'obtenir un flux d'air moins turbulent, plus laminaire, plus rapide et donc plus efficace pour le refroidissement des échangeurs thermiques.

Egalement, l'augmentation de l'espace sous-capot donne de la place pour agencer des autres composants du véhicule entre le dispositif d'échangeurs thermiques et le panneau de volets, tel que notamment un radar de détection ou un klaxon.

De plus, la longueur des volets agencés verticalement est réduite par rapport aux volets de l'art antérieur agencés horizontalement, et leur nombre est augmenté de l'ordre de 15 à 20%. Ainsi, les volets présentent une meilleure résistance en flexion et le panneau de volets présente une meilleure résistance en position de fermeture notamment à la pression d'air ou d'eau (par exemple à un passage de gué).

Selon une ou plusieurs caractéristiques du panneau de volets, prise seule ou en combinaison,
- la surface courbe présente une courbure bombée, par exemple la courbure bombée est saillant vers l'avant du véhicule automobile,
- le panneau de volets selon l'invention comporte au moins un axe souple d'entrainement relié aux volets s'étendant perpendiculairement aux axes longitudinaux de pivotement des volets. L'axe souple d'entrainement flexible permet à celui-ci de suivre la surface courbe dans laquelle s'inscrit l'alignement des axes longitudinaux de pivotement.
- le panneau de volets comporte un actionneur rotatif relié à l'axe souple d'entrainement configuré pour entraîner l'axe souple d'entrainement en rotation,
- le panneau de volets comporte un pignon monté sur chaque volet coaxialement à l'axe longitudinal de pivotement et l'axe souple d'entrainement comporte au moins une vis sans fin engrenant avec les pignons,
- l'axe souple d'entrainement comporte au moins deux vis sans fin adjacentes, de sens opposés, engrenant avec les pignons présentant des hélices hélicoïdales opposées. Ainsi, un même sens de rotation de l'axe souple d'entrainement présentant un double sens d'hélice peut faire pivoter les volets en même temps dans des sens de rotation contraires de part et d'autre d'une portion concave de l'axe d'entrainement.
- le panneau de volets comporte au moins un actionneur linéaire relié à l'axe souple d'entrainement configuré pour déplacer linéairement l'axe souple d'entrainement,
- le panneau de volets comporte un pignon monté sur chaque volet coaxialement à l'axe longitudinal de pivotement et l'axe souple d'entrainement comporte une crémaillère engrenant avec les pignons,
- au moins deux pignons présentent des diamètres de dimensions différentes. On peut ainsi adapter le pivotement des volets au rayon de courbure du panneau de volets.
- le plus grand pignon engrène au centre d'une portion concave de l'axe souple d'entrainement et les pignons sont agencés du plus grand au plus petit en partant de la portion concave de l'axe souple d'entrainement, de manière symétrique,
- le panneau de volets comporte un actionneur relié à une extrémité de l'axe souple d'entrainement et agencé sur un côté du panneau de volets. Cela permet de déporter l'actionneur en dehors d'une zone centrale frontale du véhicule pour éviter son endommagement en cas de crash du véhicule à l'avant,
- les axes longitudinaux de pivotement parallèles sont destinés à être disposés verticalement dans le véhicule automobile.

L'invention a aussi pour objet un véhicule automobile caractérisé en ce qu'il comporte au moins un panneau de volets tel que décrit précédemment, agencé à l'arrière d'au moins une entrée d'air du véhicule automobile, les axes longitudinaux de pivotement des volets du panneau de volets étant disposés verticalement dans le véhicule.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente une vue schématique de côté et en coupe verticale d'un panneau de volets monté dans un véhicule automobile,
- la figure 2 représente une vue schématique en coupe horizontale d'éléments du véhicule automobile de la figure 1,
- la figure 3 montre une vue schématique d'un exemple de réalisation du panneau de volets en position d'ouverture, en coupe horizontale,
- la figure 4 représente une vue similaire à la figure 2 avec le panneau de volets en position de fermeture et un actionneur selon un premier exemple de réalisation,
- la figure 5a montre un détail du panneau de volets de la figure 4 en position d'ouverture,
- la figure 5b montre une vue similaire à la figure 5a dans une position d'ouverture intermédiaire,
- la figure 6a illustre un détail d'un panneau de volets, selon un autre exemple de réalisation,
- la figure 6b illustre un détail d'un panneau de volets, selon un autre exemple de réalisation,
- la figure 6c illustre un détail d'un panneau de volets selon un autre exemple de réalisation,
- la figure 7 est un schéma illustrant l'angle de rotation parcouru par un volet en fonction du diamètre d'un pignon,
- la figure 8 représente une vue schématique en coupe horizontale d'éléments d'un panneau de volets en position d'ouverture,
- la figure 9 représente une vue similaire à la figure 2 avec le panneau de volets en position de fermeture et un actionneur selon un deuxième exemple de réalisation,
- la figure 10a montre un détail du panneau de volets de la figure 9 en position d'ouverture, et
- la figure 10b représente une vue similaire à la figure 10a dans une position intermédiaire.

Sur ces figures, les éléments sensiblement identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Les directions avant/arrière sont désignées en référence au sens de marche du véhicule automobile et vertical/horizontal en référence au véhicule.

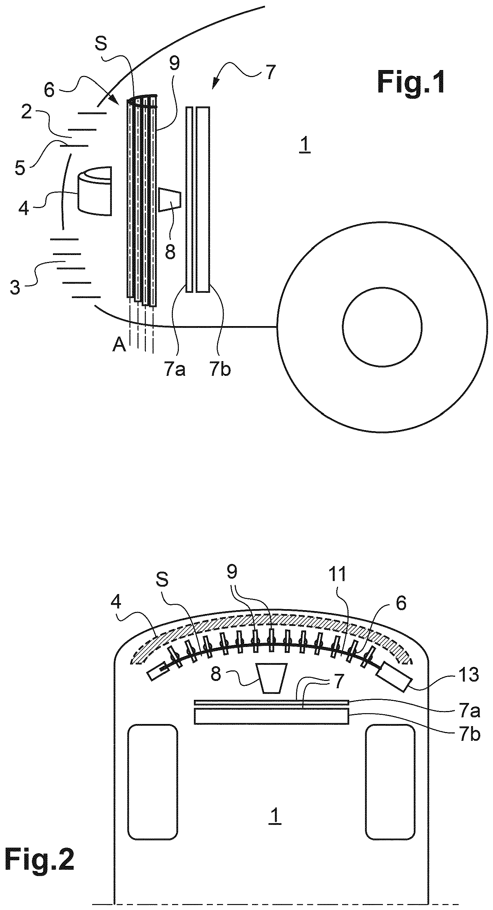

La figure 1 représente un exemple de véhicule automobile 1.

Le véhicule automobile 1 comporte une ou deux entrées d'air 2, 3, respectivement dites voie haute et voie basse, ménagées à l'avant du véhicule 1, séparées par une poutre parechoc 4 derrière des grilles de la calandre 5 du véhicule 1. Les entrées d'air 2 et 3 sont montées l'une en dessus de l'autre, de part et d'autre de la poutre parechoc 4.

Le véhicule automobile 1 comporte également au moins un panneau 6 de volets 9, agencé entre la poutre parechoc 4 et un dispositif d'échangeurs thermiques 7. Le dispositif d'échangeurs thermiques 7 comporte un ou plusieurs échangeurs thermiques, tel qu'un condenseur 7a et/ou un radiateur 7b.

Le panneau 6 de volets 9 peut être monté dans un guide d'air (non représenté) permettant de canaliser l'air depuis les entrées d'air 2, 3 vers le dispositif d'échangeurs thermiques 7.

Dans le cas où le véhicule 1 comporte deux entrées d'air 2, 3, le véhicule 1 peut comporter deux panneaux 6 de volets 9 agencés à l'arrière d'une entrée d'air 2, 3 respective. Les deux panneaux 6 de volets 9 peuvent être indépendants l'un de l'autre. Alternativement, le véhicule 1 comporte un seul panneau 6 de volets 9 agencé à l'arrière des deux entrées d'air 2, 3, dans un canal commun.

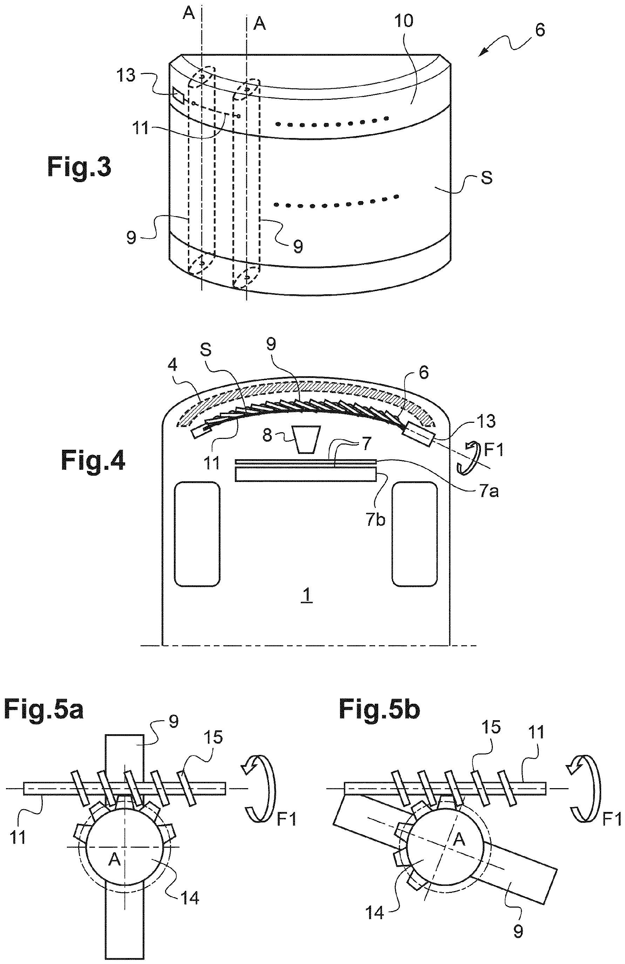

Mieux visible sur les figures 2 et 3, le panneau 6 de volets 9 est composé d'une pluralité de volets 9.

Les volets 9 (ou lamelles) s'étendent selon un axe longitudinal de pivotement A autour duquel ils sont respectivement montés mobiles en pivotement.

Les volets 9 sont montés dans un cadre 10 du panneau 6 de volets 9 courbe. Les axes longitudinaux de pivotement A sont disposés les uns à côté des autres et s'étendent parallèlement les uns aux autres de manière à ce que lorsque le panneau 6 de volets 9 est en position de fermeture, les volets 9 obstruent intégralement les entrées d'air 2, 3.

L'alignement des axes longitudinaux de pivotement A s'inscrit dans une surface courbe S (ou surface incurvée), différente d'un plan. Ce peut être une surface de forme quelconque exceptée totalement plane, telle que bombée ou partiellement bombée et qui peut être partiellement plane.

De plus, les axes longitudinaux de pivotement A s'étendent verticalement lorsque le panneau 6 de volets 9 est monté dans le véhicule automobile 1 (figure 1).

On peut ainsi obtenir un panneau 6 de volets 9 dont la forme peut suivre la forme des éléments situés devant le panneau 6 de volets 9, tels que la poutre parechoc 4, la calandre 5 ou d'autres éléments de renforts du véhicule 1. Le panneau 6 de volets 9 présente ainsi par exemple une courbure bombée saillant vers l'avant du véhicule 1 (figure 2). Les volets 9 sont alors agencés de façon concentrique en position d'ouverture.

Le panneau 6 de volets 9 peut ainsi être rapproché au plus près des entrées d'air 2, 3 du véhicule 1, ce qui permet d'augmenter l'espace disponible sous capot.

La distance entre le panneau 6 de volets 9 et le dispositif d'échangeurs thermiques 7 peut être augmentée, permettant d'obtenir un flux d'air moins turbulent et donc plus laminaire, plus rapide et plus efficace pour le refroidissement des échangeurs thermiques.

Egalement, l'augmentation de l'espace sous-capot laisse de la place pour agencer des autres composants du véhicule 1 entre le dispositif d'échangeurs thermiques 7 et le panneau 6 de volets 9, tel que notamment un radar 8 de détection ou un klaxon.

De plus, la longueur des volets 9 agencés verticalement est réduite par rapport aux volets de panneaux de l'art antérieur agencés horizontalement et leur nombre est augmenté de l'ordre de 15 à 20%. Ainsi, les volets 9 présentent une meilleure résistance en flexion et le panneau 6 de volets 9 présente une meilleure résistance en position de fermeture notamment à la pression d'air ou d'eau (par exemple à un passage de gué).

L'axe longitudinal de pivotement A peut être un axe central du volet 9, tel qu'un axe longitudinal de symétrie du volet 9 si les volets 9 présentent un profil symétrique ou peut être un axe d'extrémité du volet 9. L'axe longitudinal de pivotement A est matérialisé par deux pivots 19 du panneau 6 de volets 9 montés aux deux extrémités longitudinales de chaque volet 9, eux-mêmes montés dans des paliers du cadre 10. Les volets 9 sont par exemples tous identiques.

Le panneau 6 de volets 9 comporte en outre au moins un axe souple d'entrainement 11 relié aux volets 9 pour entrainer les volets 9 en pivotement. L'axe souple d'entrainement 11 est flexible, cela permet à celui-ci de suivre la surface courbe S dans laquelle s'inscrit l'alignement des axes longitudinaux de pivotement A.

L'axe souple d'entrainement 11 s'étend perpendiculairement aux axes longitudinaux de pivotement A des volets 9.

Le panneau 6 de volets 9 comporte également un actionneur 13 relié à l'axe souple d'entrainement 11 pour entraîner les volets 9 en pivotement autour de leur axe longitudinal de pivotement A.

L'axe souple d'entrainement 11 est relié aux volets 9 sur un côté du volet 9, c'est-à-dire à l'écart de l'axe longitudinal de pivotement A, par exemple d'un même côté de l'axe longitudinal de pivotement A pour tous les volets 9.

L'actionneur 13 est par exemple relié à une extrémité de l'axe souple d'entrainement 11. Il peut ainsi être agencé sur un côté du panneau 6 de volets 9. Cela permet de déporter l'actionneur 13 en dehors d'une zone centrale frontale du véhicule 1 pour éviter son endommagement en cas de crash du véhicule 1 à l'avant.

Selon un premier exemple de réalisation représenté sur les figures 4, 5a et 5b, 8, l'actionneur 13 est rotatif. Il est configuré pour entrainer l'axe souple d'entrainement 11 en rotation autour de son axe.

Pour cela, selon un exemple de réalisation visible sur les figures 5a et 5b, le panneau 6 de volets 9 comporte un pignon 14 monté sur chaque volet 9 coaxialement à l'axe longitudinal de pivotement A.

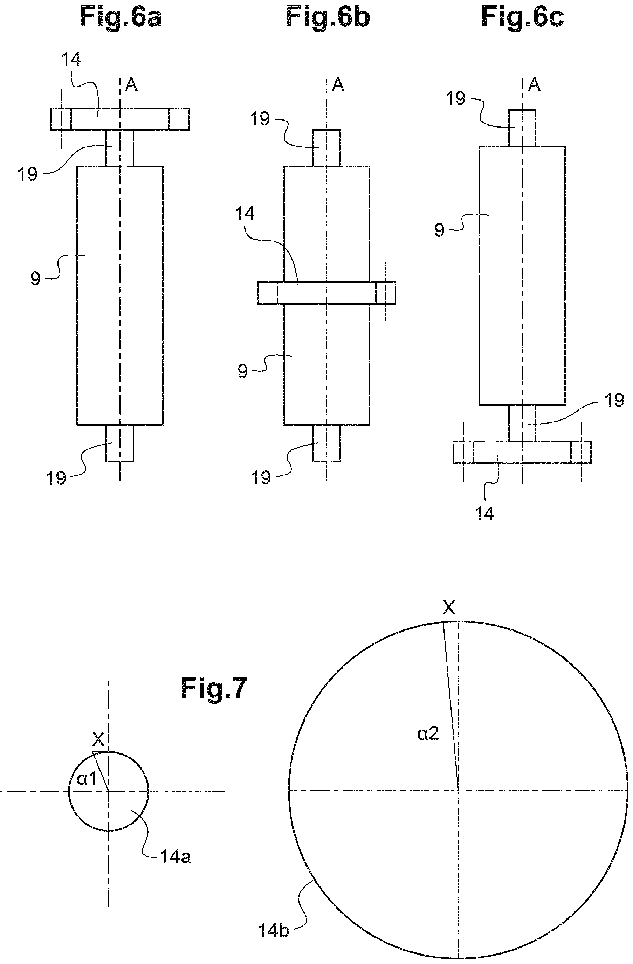

Comme on peut le voir que les exemples illustrés par les figures 6a, 6b et 6c, le pignon 14 peut être agencé à une extrémité du volet 9 supérieure (figure 6a) ou inférieure (figure 6c), sur un des deux pivots 19 associé à chaque volet 9. Selon un autre exemple, le pignon 14 est agencé entre les deux extrémités du volet 9, par exemple au milieu (figure 6b), le volet 9 étant alors scindé en deux parties supérieure et inférieure, solidaires en rotation.

L'axe souple d'entrainement 11 comporte au moins une vis sans fin 15 engrenant avec les pignons 14 à denture hélicoïdale. L'axe souple d'entrainement 11 est par exemple en plastique et obtenu par moulage.

En fonctionnement, et en référence aux figures 4, 5a et 5b, l'entrainement de l'axe souple 11 en rotation par l'actionneur rotatif 13 selon la flèche F1, entraine la rotation des pignons 14, qui entraine le pivotement des volets 9 dans le même sens d'une position d'ouverture (figure 5a) vers une position intermédiaire d'ouverture (figure 5b).

Selon un exemple de réalisation, on prévoit que les volets 9 pivotent en sens inverse de part et d'autre d'une portion concave du panneau 6 de volets 9, telle qu'au centre de la surface bombée S.

Pour cela, l'axe souple d'entrainement 11 comporte au moins deux vis sans fin 15a, 15b. Les dentures de la première et de la deuxième vis sans fin 15a, 15b sont hélicoïdales, adjacentes et de sens opposés à partir du centre de l'axe souple d'entrainement 11.

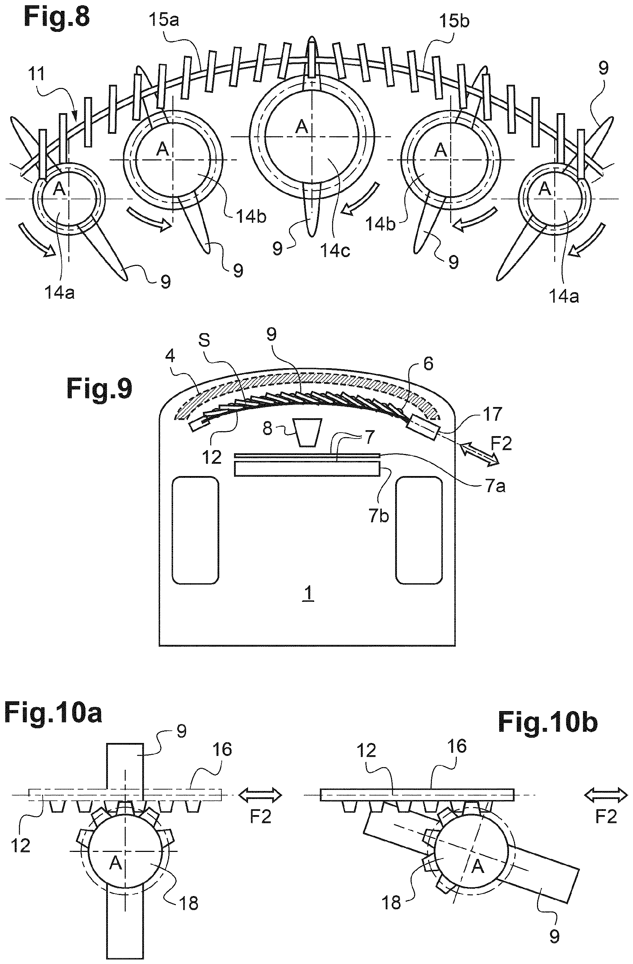

Les pignons 14a, 14b engrenant avec la première vis sans fin 15a présentent un sens d'hélice opposé aux pignons 14a, 14b, 14c engrenant avec la deuxième vis sans fin 15b. Sur la figure 8, les pignons 14a, 14b engrenant avec la première vis sans fin 15a orientée à gauche tournent en sens antihoraire et les pignons 14a, 14b, 14c engrenant avec la deuxième vis sans fin 15b orientée à droite tournent en sens horaire. Un même sens de rotation de l'axe souple d'entrainement 11 présentant un double sens d'hélice fait pivoter les volets 9 en même temps dans des sens de rotation contraires de part et d'autre de la portion concave de l'axe d'entrainement 11.

Alternativement, on prévoit deux actionneurs 13 et deux axes souples d'entrainement 11 à vis sans fin, indépendants et tournant en sens inverse pour avoir des sens de pivotement contraires des volets 9.

Selon un exemple de réalisation, au moins deux pignons 14a, 14b, 14c présentent des diamètres de dimensions différentes. On peut ainsi adapter le pivotement des volets 9 au rayon de courbure du panneau 6 de volets 9.

Plus le diamètre du pignon est grand et plus l'angle de rotation parcouru par le volet 9 est faible, comme on l'a illustré en figure 7 où, pour un même déplacement linéaire X engendré par la rotation de l'axe souple d'entrainement 11, l'angle de rotation α1 parcouru par le pignon 14a de petit diamètre est plus grand que l'angle de rotation α2 parcouru par le pignon 14b de plus grand diamètre. Ainsi les pignons 14a de diamètres plus petit engrènent de part et d'autre du centre de l'axe souple d'entrainement 11, plus loin du centre que les pignons 14b de diamètres plus grands.

Dans le cas d'un panneau 6 de volets 9 présentant une courbure bombée, le plus grand pignon 14c engrène au centre de l'axe souple d'entrainement 11. Les autres pignons 14a, 14b sont agencés du plus grand 14b au plus petit 14a en partant de la portion concave vers les extrémités, de manière symétrique par rapport à la portion concave (figure 8). Ainsi, l'angle de rotation des volets 9 est modulé en fonction des diamètres des pignons 14a, 14b et 14c.

L'inclinaison des volets 9 peut ainsi être pilotée entre une position de fermeture dans laquelle les volets 9 s'inscrivent sensiblement dans la surface courbe S et bloquent le passage de l'air et plusieurs positions intermédiaires jusqu'à une position d'ouverture dans laquelle les volets 9 sont sensiblement perpendiculaires à la surface courbe S et où un flux d'air maximum peut circuler entre les volets 9.

Les figures 9, 10a et 10b illustrent un deuxième mode de réalisation.

Ce mode de réalisation diffère du précédent par le fait que l'actionneur 17 est configuré pour déplacer linéairement l'axe souple d'entrainement 12, dans sa direction axiale.

Pour cela, selon un exemple de réalisation visible sur les figures 7a et 7b, le panneau 6 de volets 9 comporte un pignon 18 monté sur chaque volet 9 coaxialement à l'axe longitudinal de pivotement A. Le pignon 18 présente une denture droite.

L'axe souple d'entrainement 12 comporte une crémaillère 16 (ou courroie dentée) engrenant avec les pignons 18. Elle est par exemple en plastique et obtenue par moulage.

En fonctionnement, l'entrainement de l'axe souple 12 par l'actionneur linéaire 17 selon la flèche F2, entraine la rotation des pignons 18, entrainant le pivotement des volets 9 dans le même sens d'une position d'ouverture (figure 10a) vers une position intermédiaire d'ouverture (figure 10b).

On peut aussi prévoir deux actionneurs 17 et deux axes souples d'entrainement 12 à crémaillère indépendants actionnés sens inverse pour avoir des sens de pivotement opposés pour les volets 9.

## Revendications

1. Panneau (6) de volets (9) pour entrée d'air (2, 3) de véhicule automobile (1) comprenant une pluralité de volets (9) montés mobiles en pivotement autour d'un axe longitudinal de pivotement (A) respectif, les axes longitudinaux de pivotement (A) s'étendant parallèlement les uns aux autres et étant disposés les uns à côté des autres, l'alignement des axes longitudinaux de pivotement (A) s'inscrivant dans une surface courbe (S), **caractérisé en ce qu'**il comporte au moins un axe souple d'entrainement (11 ; 12) relié aux volets (9) s'étendant perpendiculairement aux axes longitudinaux de pivotement (A) des volets (9).

2. Panneau (6) de volets (9) selon la revendication précédente, **caractérisé en ce que** la surface courbe (S) présente une courbure bombée.

3. Panneau (6) de volets (9) selon l'une des revendications précédentes, **caractérisé en ce qu'**il comporte un actionneur rotatif (13) relié à l'axe souple d'entrainement (11), configuré pour entraîner l'axe souple d'entrainement (11) en rotation.

4. Panneau (6) de volets (9) selon la revendication précédente, **caractérisé en ce qu'**il comporte un pignon (14 ; 14a, 14b, 14c) monté sur chaque volet (9) coaxialement à l'axe longitudinal de pivotement (A), l'axe souple d'entrainement (11) comportant au moins une vis sans fin (15 ; 15a, 15b) engrenant avec les pignons (14; 14a, 14b, 14c).

5. Panneau (6) de volets (9) selon la revendication précédente, **caractérisé en ce que** l'axe souple d'entrainement (11) comporte au moins deux vis sans fin (15a, 15b) adjacentes, de sens opposés, engrenant avec les pignons (14a, 14b, 14c) présentant des hélices hélicoïdales opposées.

6. Panneau (6) de volets (9) selon l'une quelconque des revendications 1 ou 2, **caractérisé en ce qu'**il comporte au moins un actionneur linéaire (17) relié à l'axe souple d'entrainement (12), configuré pour déplacer linéairement l'axe souple d'entrainement (12).

7. Panneau (6) de volets (9) selon la revendication précédente, **caractérisé en ce qu'**il comporte un pignon (18) monté sur chaque volet (9) coaxialement à l'axe longitudinal de pivotement (A), l'axe souple d'entrainement (12) comportant une crémaillère (16) engrenant avec les pignons (18).

8. Panneau (6) de volets (9) selon l'une des revendications 4, 5 ou 7, **caractérisé en ce qu'**au moins deux pignons (14a, 14b, 14c) présentent des diamètres de dimensions différentes.

9. Panneau (6) de volets (9) selon la revendication précédente, **caractérisé en ce que** le plus grand pignon (14c) engrène au centre d'une portion concave de l'axe souple d'entrainement (11), les pignons (14a, 14b, 14c) étant agencés du plus grand (14c) au plus petit (14a) en partant de la portion concave de l'axe souple d'entrainement (11) de manière symétrique.

10. Panneau (6) de volets (9) selon l'une des revendications 3 à 9, **caractérisé en ce qu'**il comporte un actionneur (13 ; 17) relié à une extrémité de l'axe souple d'entrainement (11 ; 12), l'actionneur (13 ; 17) étant agencé sur un côté du panneau (6) de volets (9).

11. Panneau (6) de volets (9) selon l'une des revendications précédentes, **caractérisé en ce que** les axes longitudinaux de pivotement (A) parallèles sont destinés à être disposés verticalement dans le véhicule automobile (1).

12. Véhicule automobile (1) **caractérisé en ce qu'**il comporte au moins un panneau (6) de volets (9) selon l'une des revendications précédentes, agencé à l'arrière d'au moins une entrée d'air (2, 3) du véhicule automobile (1), les axes longitudinaux de pivotement (A) des volets (9) du panneau (6) de volets (9) étant disposés verticalement dans le véhicule (1).

## Patentansprüche

1. Platte (6) mit Klappen (9) zum Lufteinlass (2, 3) eines Kraftfahrzeugs (1), welche mehrere Klappen (9) umfasst, die schwenkbeweglich um eine jeweilige Schwenk-Längsachse (A) gelagert sind, wobei sich die Schwenk-Längsachsen (A) parallel zueinander erstrecken und nebeneinander angeordnet sind, wobei die Reihe der Schwenk-Längsachsen (A) in eine gekrümmte Fläche (S) einbeschrieben ist, **dadurch gekennzeichnet, dass** sie wenigstens eine mit den Klappen (9) verbundene flexible Antriebsachse (11; 12) aufweist, die sich senkrecht zu den Schwenk-Längsachsen (A) der Klappen (9) erstreckt.

2. Platte (6) mit Klappen (9) nach dem vorhergehenden Anspruch, **dadurch gekennzeichnet, dass** die gekrümmte Fläche (S) eine gewölbte Krümmung aufweist.

3. Platte (6) mit Klappen (9) nach einem der vorhergehenden Ansprüche, **dadurch gekennzeichnet, dass** sie einen mit der flexiblen Antriebsachse (11) verbundenen Drehstellantrieb (13) aufweist, der dafür ausgelegt ist, die flexible Antriebsachse (11) drehend anzutreiben.

4. Platte (6) mit Klappen (9) nach dem vorhergehenden Anspruch, **dadurch gekennzeichnet, dass** sie an jeder Klappe (9) ein dort koaxial mit der Schwenk-Längsachse (A) angebrachtes Ritzel (14; 14a, 14b, 14c) aufweist, wobei die flexible Antriebsachse (11) wenigstens eine Schnecke (15; 15a, 15b) aufweist, die mit den Ritzeln (14; 14a, 14b, 14c) kämmt.

5. Platte (6) mit Klappen (9) nach dem vorhergehenden Anspruch, **dadurch gekennzeichnet, dass** die flexible Antriebsachse (11) wenigstens zwei benachbarte Schnecken (15a, 15b) mit entgegengesetzten Gangrichtungen aufweist, die mit den Ritzeln (14a, 14b, 14c) kämmen, die Schrägverzahnungen mit entgegengesetzten Schrägungsrichtungen aufweisen.

6. Platte (6) mit Klappen (9) nach einem der Ansprüche 1 oder 2, **dadurch gekennzeichnet, dass** sie wenigstens einen mit der flexiblen Antriebsachse (12) verbundenen linearen Stellantrieb (17) aufweist, der dafür ausgelegt ist, die flexible Antriebsachse (12) linear zu verschieben.

7. Platte (6) mit Klappen (9) nach dem vorhergehenden Anspruch, **dadurch gekennzeichnet, dass** sie an jeder Klappe (9) ein dort koaxial mit der Schwenk-Längsachse (A) angebrachtes Ritzel (18) aufweist, wobei die flexible Antriebsachse (12) eine Zahnstange (16) aufweist, die mit den Ritzeln (18) kämmt.

8. Platte (6) mit Klappen (9) nach einem der Ansprüche 4, 5 oder 7, **dadurch gekennzeichnet, dass** wenigstens zwei Ritzel (14a, 14b, 14c) Durchmesser mit unterschiedlichen Maßen aufweisen.

9. Platte (6) mit Klappen (9) nach dem vorhergehenden Anspruch, **dadurch gekennzeichnet, dass** das größte Ritzel (14c) in der Mitte eines konkaven Abschnitts der flexiblen Antriebsachse (11) kämmt, wobei die Ritzel (14a, 14b, 14c), beginnend an dem konkaven Abschnitt der flexiblen Antriebsachse (11), auf symmetrische Weise vom größten (14c) bis zum kleinsten (14a) angeordnet sind.

10. Platte (6) mit Klappen (9) nach einem der Ansprüche 3 bis 9, **dadurch gekennzeichnet, dass** sie einen Stellantrieb (13; 17) aufweist, der mit einem Ende der flexiblen Antriebsachse (11; 12) verbunden ist, wobei der Stellantrieb (13; 17) auf einer Seite der Platte (6) mit Klappen (9) angeordnet ist.

11. Platte (6) mit Klappen (9) nach einem der vorhergehenden Ansprüche, **dadurch gekennzeichnet, dass** die parallelen Schwenk-Längsachsen (A) dazu bestimmt sind, vertikal in dem Kraftfahrzeug (1) angeordnet zu werden.

12. Kraftfahrzeug (1), **dadurch gekennzeichnet, dass** es wenigstens eine Platte (6) mit Klappen (9) nach einem der vorhergehenden Ansprüche aufweist, die hinter wenigstens einem Lufteinlass (2, 3) des Kraftfahrzeugs (1) angeordnet ist, wobei die Schwenk-Längsachsen (A) der Klappen (9) der Platte (6) mit Klappen (9) vertikal in dem Fahrzeug (1) angeordnet sind.

## Claims

1. Panel (6) of flaps (9) for an air intake (2, 3) of motor vehicle (1) comprising a plurality of flaps (9) mounted with the ability to pivot about a respective longitudinal pivot axis (A), the longitudinal pivot axes (A) extending parallel to one another and being disposed side by side, the aligned longitudinal pivot axes (A) lying within a curved surface (S), **characterized in that** it comprises at least one flexible drive shaft (11, 12) connected to the flaps (9) extending perpendicularly to the longitudinal pivot axes (A) of the flaps (9).

2. Panel (6) of flaps (9) according to the preceding claim, **characterized in that** the curved surface (S) has a convex curvature.

3. Panel (6) of flaps (9) according to the preceding claims, **characterized in that** it includes a rotary actuator (13) connected to the flexible drive shaft (11) configured to drive the flexible drive shaft (11) in rotation.

4. Panel (6) of flaps (9) according to the preceding claim, **characterized in that** it includes a pinion (14; 14a, 14b, 14c) mounted on each flap (9) coaxially with the longitudinal pivot axis (A), the flexible drive shaft (11) including at least one lead screw (15; 15a, 15b) meshing with the pinions (14; 14a, 14b, 14c).

5. Panel (6) of flaps (9) according to the preceding claim, **characterized in that** the flexible drive shaft (11) includes at least two adjacent lead screws (15a, 15b) of opposite sense meshing with pinions (14a, 14b, 14c) having opposite helix angles.

6. Panel (6) of flaps (9) according to any one of Claims 1 and 2, **characterized in that** it includes at least one linear actuator (17) connected to the flexible drive shaft (12) configured to move the flexible drive shaft (12) in a linear manner.

7. Panel (6) of flaps (9) according to the preceding claim, **characterized in that** it includes a pinion (18) mounted on each flap (9) coaxially with the longitudinal pivot axis (A), the flexible drive shaft (12) including a rack (16) meshing with the pinions (18).

8. Panel (6) of flaps (9) according to one of Claims 4, 5 or 7, **characterized in that** at least two pinions (14a, 14b, 14c) have diameters with different dimensions.

9. Panel (6) of flaps (9) according to the preceding claim, **characterized in that** the largest pinion (14c) meshes with the centre of a concave portion of the flexible drive shaft (11), the pinions (14a, 14b, 14c) being arranged from the largest (14c) to the smallest (14a) starting from the concave portion of the flexible drive shaft (11) in a symmetrical manner.

10. Panel (6) of flaps (9) according to one of Claims 3 to 9, **characterized in that** it includes an actuator (13; 17) connected to one end of the flexible drive shaft (11; 12), the actuator (13; 17) being arranged on one side of the panel (6) of flaps (9).

11. Panel (6) of flaps (9) according to any one of the preceding claims, **characterized in that** the parallel longitudinal pivot axes (A) are intended to be disposed vertically in the motor vehicle (1).

12. Motor vehicle (1) **characterized in that** it includes at least one panel (6) of flaps (9) according to any one of the preceding claims disposed behind at least one air intake (2, 3) of the motor vehicle (1), the longitudinal pivot axes (A) of the flaps (9) of the panel (6) of flaps (9) being disposed vertically in the vehicle (1).
